## Europäisches Patentamt
## European Patent Office
## Office européen des brevets

(11) Publication number: **0 036 950**
**A1**

# EUROPEAN PATENT APPLICATION

(21) Application number: **81101425.7**

(22) Date of filing: **27.02.81**

(51) Int. Cl.³: **G 06 K 7/10**

(30) Priority: **06.03.80 US 127673**

(43) Date of publication of application:
**07.10.81 Bulletin 81/40**

(84) Designated Contracting States:
**AT BE CH DE FR GB IT LI LU NL SE**

(71) Applicant: **R. J. REYNOLDS TOBACCO COMPANY**

**Winston-Salem North Carolina 27102(US)**

(72) Inventor: **Serge, Richard F.**
**655 Lewisville-Vienna Road**
**Lewisvile North Carolina 27023(US)**

(72) Inventor: **Dugan, Danny D.**
**Route 4 Box 267**
**Advance North Carolina 27023(US)**

(74) Representative: **Hoeger, Stellrecht & Partner**
**Uhlandstrasse 14c**
**D-7000 Stuttgart 1(DE)**

(54) **Dynamic threshold detector.**

(57) A threshold detector for dynamically tracking the midpoint D.C. value of the excursions of a varying input signal and for producing a binary representation of that signal is disclosed. The circuit includes a peak detector and splitter network which incorporates a pair of oppositely poled diodes feeding corresponding capacitors connected between the diodes and the ground. The junction between the diodes and the capacitors are connected through corresponding resistors to a midpoint which is connected through a negative feedback amplifier and across a potentiometer. The output of the detector is obtained from the potentiometer and is applied to one input of a comparator, where the detector output is compared with the original signal to produce a binary representation of that input signal.

EP 0 036 950 A1

FIG. I.

## Background of the invention

The present invention relates, in general, to dynamic threshold detectors, and more particularly to a circuit for dynamically tracking the midpoint of the excursions of a varying analog signal and for producing binary representations of variations in the analog signal.

In situations where it is desired to detect amplitude variations in an analog signal, it is often difficult to distinguish between the positive-going and negative-going excursions of the analog values, particularly where amplitude variations are very small, where the changes in amplitude are relatively gradual, or where the absolute value of the signal may vary, thus obscuring the signals to be detected. Optical bar code readers, for example, produce an analog signal which varies with the optical characteristics of the code bars, white bars producing a high value signal and black bars producing a low value signal. When such bar codes are scanned by an optical scanning camera, the camera produces an analog output signal which varies in amplitude in accordance with the intensity of light reflected from the bars. In order to obtain an accurate reading of the code, it is necessary to differentiate between the analog values representing the white bars and those representing the black bars. However, this is often extremely difficult, particularly where the contrast between the bars is low, where ambient light is not sufficient to give a strong reading, where the ambient light varies during the course of reading a single label or varies from one reading to the next, and like conditions. Such bar code reader systems are described, for example, in copending application Serial No.         of Richard F. Serge (Attorney's Docket JTC 02-75), entitled "Bar Code Reader System" and filed on even date herewith.

As set forth in greater detail in the aforesaid
copending application, the accurate detection of the
positive-going and negative-going excursions in an
analog signal which, for example, may represent a bar
code is extremely important if an accurate reading
of the code ist to be obtained. Attempts have been
made in the prior art to provide systems for accurately
and reliably detecting such signals under all conditions,
but without success, for variations in lighting conditions, and the like, which may be generally referred
to as background noise, too often succeed in masking
the desired signal.

One approach to solving the problem has been the
provision of a manually set threshold value which
may serve as a reference point for the analog signal.
However, such a manual adjustment is of no practical
value in a system such as that illustrated in the copending application, since the conditions under which
the reading of the label takes place can vary too
rapidly for manual compensation by an operator. Thus,
a change in the ambient light level between two readings
of a label or during the reading of a single label can
shift the entire analog signal above or below the manually-set threshold value so that no reading is obtained,
or a decreased contrast in a single label, perhaps
caused by fading of the label ink, can reduce the
amplitude of the analog signal variation sufficiently
to prevent either the negative or the positive excursions
from intersecting the threshold value.

Other approaches to the problem have involved the use
of threshold detectors which respond to an average
value of the analog signal obtained from a prior
reading. Such averaging systems, however, cannot compensate for variations which might occur during the course of a reading, and thus the average value could be greatly distorted. Further, an average value taken for a prior reading is of little value in obtaining an accurate detection of a current analog signal, particularly where ambient lighting conditions can vary, where labels can vary from one to the next, and where other changes can take place in the systems. Thus, although such detectors may in some circumstances be an improvement over manually ajustable threshold systems, they do not solve the problems which are encountered in practical applications of optical scanning readers.

## Summary of the Invention

The foregoing difficulties are avoided by the dynamic threshold detector of the present system which acts to dynamically track the midpoint of the positive and negative excursion of the analog signal of interest, providing a varying D. C. value which takes into account changes in conditions during the scanning operation so that accurate and reliable detection of the analog signal can be obtained. This tracking is accomplished by means of a peak detector network which receives the analog signal of interest and produces a midpoint which represents an instantaneous averaging of the analog signal. This D. C. value then is compared to the original analog signal to obtain the desired binary representation of the positive and negative excursions of the signal with respect to the D. C. midpoint value.

## Brief Description of the Drawings

The foregoing and additional objects, features and
advantages of the present invention will become
apparent to those of skill in the art from a consideration
of the following detailed description thereof taken in
conjunction with the accompanying drawings, in which:

Fig. 1 is a schematic diagram of the dynamic threshold
   detector of the present invention;

Fig. 2 is a diagrammatic representation of a bar code;

Fig. 3 is a graphical illustration of an analog waveform representing the bar code of Fig. 2 and
   showing the threshold value obtained by the
   present invention;

Fig. 4 is a graphical illustration of the binary waveform produced by the circuit of Fig. 1;

Fig. 5 is an enlarged view of the waveform of Fig. 3;
   and

Fig. 6 is an enlarged view of a portion of the waveform of Fig. 4.

## Description of a Preferred Embodiment

Although the threshold detector of the present invention has application to other circuits and
situations, it has been found particularly useful
in the context of a bar code reader for converting
the analog signal obtained from a scanning camera
into a corresponding digital signal representative of
the contrasting bars in a

bar code, and is of specific application in the bar
code reader system described in the aforesaid copending
application Serial No.          . Accordingly, the operation
of the present invention will be described in the context of such a system.

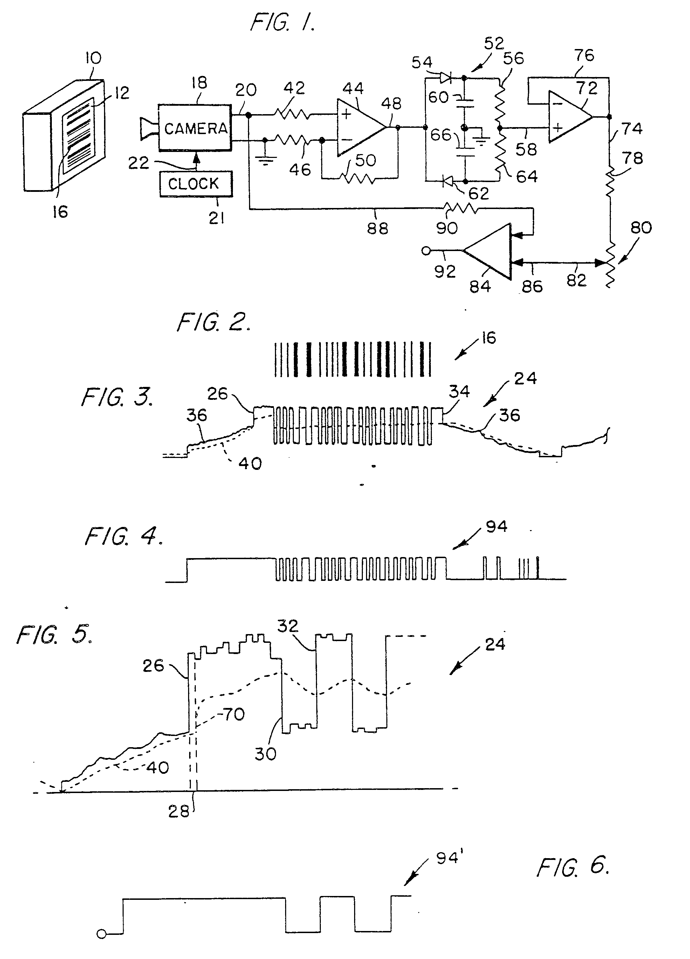

Turning now to the drawings, there is illustrated
in Fig. 1 a package or container 10 to which is affixed
a label 12 which carries a bar code 16 of conventional
and well-known form. The container may, for example,
contain cigarette cartons which are being delivered
from a manufacturing facility to a loading platform,
with the bar code being a standardized representation
of information relating to the particular container,
which information is to be detected and displayed,
stored, or otherwise utilized. As illustrated in Fig. 2
the code comprises a plurality of bars of contrasting
optical characteristics arranged alternately. The bars
are of predetermined widths, either narrow or wide,
with the desired information being encoded in the bar
width sequence, the preferred code being the so-called
interleaved two of five code, although the conventional
U. P. C. or other code may be used. The bar code may
be printed on a separate label or  directly on the carton,
and is arranged to permit one or more vertical scans
of the bar code as the container passes the reading
station.

Located at a reading station adjacent the container.
is a suitable optical scanning camera 18 which may
be, for example, a commercially available Fairchild
Line Scan Camera Model CCD1410. This camera utilizes
ambient light, and thus does not require the use of
a laser, and operates by focusing an optical image,
such as the bar code on container 10, onto a linear array of photodiodes, each of which responds to the
portion of the image which impinges upon it to produce
a corresponding output signal, or pixel. The camera
electronically scans the array of diodes to produce
on its output line 20 an analog signal representing
the outputs from each of the picture elements in
sequence. A suitable clock source 21, which may be
internal of the camera or may be a separate system
clock, drives the camera scanner by way of clock input
22 so that the output of each photodiode appears on line
20 for the duration of a single clock count, thereby
producing an output signal such as that illustrated
by waveform 24 in Fig. 3.

An enlargement of a portion of waveform 24 is illus--
trated in Fig. 5, wherein it may be seen that a typical
pulse 26 includes the sequential outputs from a
plurality of picture elements, each element being
applied to the output line for a clock time interval
generally illustrated at 28. The pulse 26, for purposes
of illustration, represents the consecutive outputs
of 16 picture elements, and thus may represent a margin
area on label 12. Since each pixel represents the
output of a photodiode, the amplitude of wave 26 varies
in accordance with the intensity of the light falling
on the particular photodiode, in accordance with its
particular output characteristics, and in accordance
with other factors such as differences in color of the
label material, imperfections in the printing of the bar
code, fading of the ink, lack of focus, and the like.

Immediately following pulse 26 is a downward excursion
of the analog signal in the form of pulse 30, followed
in turn by a positive excursion of the voltage represented by pulse 32, and so on. The pulses 30, 32 and following pulses represent the picture element outputs corresponding to the code bars, pulse 30 representing a narrow black bar, pulse 32 representing a narrow white bar, etc. The succeeding pulses in waveform 24 represent additional narrow and wide black and white bars, and are followed by another margin pulse 34 (Fig. 3). Leading into the initial margin pulse 26 and trailing the final margin pulse 34 are waveform portions 36 and 38 which represent the output from the camera due to focussing some of the diodes on the container adjacent the label area.

In order accurately to detect the differences between the white and black pulse amplitudes within waveform 24, the threshold detector of the present invention is provided to track the midpoint between the positve and negative excursions of the analog output of the camera 18. This detector provides a midpoint signal, indicated by dotted line 40 in Fig. 3, which is the dynamic threshold value for the waveform and which may be used as a basis for comparison with the relatively positive pulses such as pulse 30 to insure accurate detection of both white and black code bars, even where the absolute difference in amplitude between these pulses is not great. Accordingly, the analog signal on line 20 is applied by way of resistor 42 to the positive input of an amplifier 44, the negative input of which is connected by way of resistor 46 to a suitable ground reference point. The output of amplifier 44, which appears on line 48, is supplied in a negative feedback loop via resistor 50 to the negative input of the amplifier and is also supplied to a peak detector and splitter network 52.

Network 52 includes a forward-connected diode 54
connecting line 48 through a resistor 56 to the network output line 58. The junction between diode 54
and resistor 56 is connected through a storage capacitor
60 to a ground reference point. Similarly, line 48 is
connected by way of a reverse-connected diode 62 and
a resistor 64 to the output line 58, with the junction
between diode 62 and resistor 64 being connected through
storage capacitor 66 to ground. In this circuit, positive-
going pulses, or positive excursions of the analog
signal, are fed through diode 54 and across capacitor
60, charging the capacitor toward the peak value of
the pulse, while negative-going pulses, or negative
excursions of the analog signal, such as pulse 30 pass
through diode 62 and are applied across capacitor 66
to charge that capacitor toward the relatively negative
value of that pulse. The voltages across the two
capacitors are then averaged across resistors  56 and 64
so that the net voltage on output line 58 represents
the midpoint value of the pulses 26 and 30, illustrated
by waveform 40 in Figs. 3 and 5.

As illustrated in Fig. 5, the value of the analog
signal begins at O, and as the analog value increases,
and capacitor 60 charges, the midpoint value 40 becomes
more positive, tracking the analog waveform 24, but
lagging slightly because of the time constant of the
circuit. When the leading edge of pulse 26 is reached,
the analog value experiences a positive-going excursion
and the midpoint value of the analog signal increases
sharply, as at 70; and continues to increase throughout
the duration of pulse 26. As noted, the waveform tracks
even  small variations in pulse 26, but continues to
increase as long as the waveform 24 is more positive
than the value represented by waveform 40. Upon

reaching the negative excursion produced by pulse 30, the waveform 40 declines and then increases again when the positive-going excursion 32 is reached, the waveform 40 continuing to dynamically track the positive and negative excursions of the waveform 24. Although the variations in waveforms 24 and 40 are exaggerated for purposes of illustration, it will be understood that waveform 40 closely tracks the midpoint value of the excursions of the analog signal even though there are variations in the absolute amplitude of the analog signal either from one signal to the next, or during the course of even a single positive or negative excursion. In this way, the D. C. signal 40 is maintained continuously and accurately at the midpoint of the excursions of waveform 24 to provide a dynamic threshold value.

The threshold voltage on line 58 is applied to the positive input of a buffer amplifier 72, the output of which appears on line 74. A suitable negative feedback loop 76 is provided so that the buffer amplifier will maintain an amplification factor of 1. The output of amplifier 72 is the threshold waveform 40 which is applied by way of resistor 78 to an attenuator 80 which may be a potentiometer having a variable arm 82. The attenuator serves to divide the signal amplitude by a factor equal to the amplification factor of input amplifier 44 to restore the wave to the range of values produced at the output of camera 18 and appearing on line 20, so that the threshold signal can be compared to the original analog signal. This is accomplished in a comparator 84 to which the threshold voltage is applied by way of input 86 and to which the original analog voltage is applied by way of input line 88 and resistor 90.

The comparator 84, which is of conventional design, compares the two input signals on a continuous basis to provide a binary 1 output on its output line 92 whenever the level of the analog signal on line 88 exceeds the threshold voltage on input line 86. The comparator provides a binary 0 signal at its output whenever the input on line 88 falls below the threshold value provided on line 86. Thus, the signal appearing on line 92 is the binary equivalent of the waveform 24 and is illustrated by waveform 94 in Fig.4, an enlarged version of which is illustrated at 94' in Fig. 6. This binary waveform 94 thus is a binary representation of the bar code 16.

Because the threshold value represented by waveform 40 dynamically tracks the midpoint of the excursions of the analog waveform 24, the threshold signal remains at the D. C. level of the background noise on which the desired analog signals are superimposed, thus providing an accurate basis for comparison between the threshold and the positive and negative excursions of the analog signal. This insures an accurate and reliable detection of each analog excursion, and thereby insures a highly accurate and reliable detection of the varying values which are of interest.

Although the present invention has been described in terms of specific application, it will be understood that variations and modifications may be made without departing from the true spirit and scope thereof as set forth in the following claims.

WHAT IS CLAIMED IS:

1. A dynamic threshold detector for continuously
   tracking the midpoint of a varying input signal,
   comprising:

   a peak detector and splitter network having an
   input terminal and an output terminal, a first
   forward connected diode and a first resistor
   connected in series between said input and output terminals, a first storage capacitor connected
   between the junction of said first diode and said
   first resistor to a ground reference point, a
   second, reverse-connected diode and a second resistor connected in series between said input and
   output terminals, and a second storage capacitor
   connected between the junction of said second
   diode and said second resistor and said ground
   reference point;

   means for supplying a varying input signal to
   said input terminal; and

   output means connected to said output terminal,
   said output means carrying a threshold signal
   which dynamically tracks the midpoint of said
   varying input signal.

2. The dynamic threshold detector of claim 1, wherein
   said output means comprises:

   comparator means having first and second inputs;

   means for supplying said threshold signal to one
   of said comparator inputs; and

0036950

said dynamic threshold detector further including
means for supplying said varying input signal to
the other of said comparator inputs, said comparator
producing a binary representation of said varying
input signal.

3. The dynamic threshold detector of claim 2, wherein
said means for supplying a varying input signal
comprises scanning means for optically scanning
bar codes, said varying input signal constituting
an analog representation of said bar code.

4. The dynamic threshold detector of claim 3, wherein
said means for supplying a varying input signal
further includes amplifier means for said analog
representations of said bar code.

5. The dynamic threshold detector of claim 4, wherein
said output means further comprises attenuator
means for said threshold signal.

0036950

1 / 1

FIG. 1.

FIG. 2.

FIG. 3.

FIG. 4.

FIG. 5.

FIG. 6.

**European Patent Office**

**EUROPEAN SEARCH REPORT**

Application number

EP 81 10 1425

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US - A - 3 909 594 (INTERFACE MECHANISMS)<br><br>* Figures 1-2; column 1, lines 24-27; column 2, line 60 - column 4, line 51 * | 1-4 | G 06 K 7/10 |

---

**TECHNICAL FIELDS SEARCHED (Int. Cl.³)**

G 06 K 7/10

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

| | The present search report has been drawn up for all claims | | |
|---|---|---|---|
| Place of search | Date of completion of the search | Examiner | |
| The Hague | 02-07-1981 | FORLEN | |

EPO Form 1503.1   06.78